# EUROPEAN PATENT APPLICATION

(11) **EP 1 870 386 A1**
(43) Date of publication of application: **26.12.2007**
(21) Application number: 06731804.8
(22) Date of filing: 13.04.2006
(51) Int. Cl.: C03C 17/34, B32B 9/00, B32B 17/06, C09D 183/00, C09D 185/00

(54) **GLASS PLATE WITH INFRARED SHIELDING LAYER AND PROCESS FOR PRODUCING THE SAME**

(30) Priority: 15.04.2005 JP 2005118411
(71) Applicant: Asahi Glass Company, Limited, Chiyoda-ku, Tokyo 100-8405 (JP)
(72) Inventor: TOMONAGA, Hiroyuki, Asahi Glass Company, Limited, Yokohama-shi, Kanagawa 2218755 (JP); KODAIRA, Hirokazu, Asahi Glass Company, Limited, Yokohama-shi, Kanagawa 2218755 (JP); SUNAHARA, Kazuo, Asahi Glass Company, Limited, Yokohama-shi, Kanagawa 2218755 (JP)
(74) Representative: Müller-Boré & Partner Patentanwälte
(86) International application number: PCT/JP2006/307868
(87) International publication number: WO 2006/112370

(57) **Abstract**

To provide an infrared shielding layer-coated glass plate excellent in visible light transmittance and radiowave transmittance, having a low infrared transmittance, and applicable to a site where mechanical durability is required, such as a window glass plate for an automobile, and its production process.

An infrared shielding layer-coated glass plate comprising a glass substrate and an infrared shielding layer having the following first layer and the following second layer adjacent to each other formed on the glass substrate (provided that the first layer is present on the glass substrate side), wherein the first layer is a layer with a thickness of from 0.2 to 2 µm, having such a structure that fine ITO particles with an average primary particle diameter of at most 100 nm are bound to one another by a metal oxide matrix containing silicon oxide and titanium oxide; and the second layer is a metal oxide layer with a thickness of from 0.02 to 0.3 µm, containing silicon oxide and titanium oxide.

## Description

### TECHNICAL FIELD

The present invention relates to an infrared shielding layer-coated glass plate and a process for its production.

### BACKGROUND ART

In recent years, an infrared shielding film-coated glass has been employed for the purpose of shielding infrared rays entering into a vehicle or building through a vehicle glass or building glass thereby to reduce the temperature rise in the vehicle or building or to reduce the air conditioning load (Patent Document 1). Further, glass for vehicles or glass for building is required to have a high visible light transmittance to secure safety or visibility, in many cases.

Heretofore, there have been many proposals to impart an infrared shielding property to a glass plate thereby to increase a heat-shielding performance. For example, there has been a proposal to incorporate infrared absorptive ions in glass thereby to impart an infrared shielding property to a glass plate itself, or a proposal to form an electroconductive film on the surface of a glass substrate thereby to impart an infrared shielding property, and such a proposal has been practically employed.

However, with respect to a glass plate having infrared absorptive ions incorporated in glass, it has been difficult to increase the infrared absorptivity while maintaining the visible light transmittance at a high level, and particularly, it has been difficult to increase the shielding performance against intermediate wavelength infrared rays having a wavelength of from 1.5 µm to 2.7 µm.

On the other hand, by the method of forming an electroconductive film on the surface of a glass substrate, radiowaves can not transmit through the glass due to the electroconductive film, which tends to bring about an inconvenience as radiowave transmittance through an opening has been required along with the progress in mobile telecommunication in recent years. Thus, it has been very difficult to produce a glass plate having transparency, infrared-shielding property and radiowave transmittance at the same time.

In order to solve the above-mentioned problems, a method has been proposed wherein a glass substrate is coated with a coating film having fine particles of tin oxide-doped indium oxide (ITO) capable of providing a high infrared shielding performance dispersed in a binder, thereby to provide an infrared shielding film-coated glass plate (Patent Documents 2 and 3). By this method, an infrared shielding property can be imparted while maintaining a relatively high visible light transmittance, and at the same time, the electrical conductivity as the film will be suppressed by the presence of the binder, whereby it will be possible to impart radiowave transmittance.

However, the binder to be usually used in this system was an organic binder or an inorganic binder, and the organic binder had a problem that the mechanical durability of the coating film thereby obtainable was poor, and the coating film could not be used at a site where mechanical durability was required, such as a door glass plate for an automobile. On the other hand, as the inorganic binder, a material obtained by a sol/gel method was frequently employed, and even then, in order to produce a coating film excellent in durability so that it was capable of being used at a site where the above-mentioned mechanical durability was required, it was necessary to carry out heat treatment at a relatively high temperature, for example, at a temperature of at least 400°C, preferably at least 500°C.

However, the ITO electric conductor is semiconductor of oxygen-deficient type, and if it is held at a temperature of at least 300°C in the presence of oxygen, free electrons will be lost by oxidation, whereby the infrared shielding property will be lost. Accordingly, in order to produce a coating film excellent in mechanical durability while maintaining the infrared shielding property, it is required to carry out heat treatment in a non-oxidizing atmosphere which is totally disadvantageous from the viewpoint of the costs, and a method has not yet been found whereby a highly durable infrared shielding film-coated glass plate can be produced simply at a low cost by heat treatment in atmospheric air. Thus, an infrared shielding film which can be applied to a site where high mechanical durability is required, such as a window glass plate for an automobile has not been found.

In recent years, Patent Document 4 proposes a heat-shielding film-coated glass plate excellent in abrasion resistance and transparency. In the heat-shielding film-coated glass plate, oxidation of the heat-shielding film is prevented by covering the heat-shielding film with a silicon oxide protective film containing an alkali metal, and it is characterized by being excellent in both heat shielding performance and abrasion resistance. However, since a protective film containing an alkali metal has relatively low chemical resistance, it may not be applied to a site to be exposed to severe exterior environment for a long time, such as a door glass plate or window glass plate for an automobile. In recent years, development of an infrared shielding film-coated glass plate having both higher infrared shielding property and radiowave transmittance, and excellent in mechanical and chemical durability, has been desired.
Patent Document 1: JP-A-10-279329
Patent Document 2: U.S.P. 5518810
Patent Document 3: JP-A-8-41441
Patent Document 4: JP-A-2004-338985

### DISCLOSURE OF THE INVENTION

### OBJECT TO BE ACCOMPLISHED BY THE INVENTION

It is an object of the present invention to provide an infrared shielding layer-coated glass plate which has a high visible light transmittance, a low infrared transmittance and a high radiowave transmittance and which is capable of being applied to a site where mechanical and chemical durability is highly required, such as a window glass plate for an automobile, and a production process thereof.

### MEANS TO ACCOMPLISH THE OBJECT

The present invention provides an infrared shielding layer-coated glass plate comprising a glass substrate and an infrared shielding layer having the following first layer and the second layer adjacent to each other, formed on the glass substrate (provided that the first layer is present on the glass substrate side), wherein the first layer is a layer with a thickness of from 0.2 to 2 µm, having such a structure that fine ITO particles with an average primary particle size of at most 100 nm are bound to one another by a metal oxide matrix containing silicon oxide and titanium oxide; and the second layer is a metal oxide layer with a thickness of from 0.02 to 0.3 µm, containing silicon oxide and titanium oxide.

The present invention further provides a process for producing an infrared shielding layer-coated glass plate, which comprises a step of applying a dispersion liquid comprising fine ITO particles with an average primary particle diameter of at most 100 nm dispersed in a dispersion medium, to the surface of a glass substrate and drying the dispersion liquid to form a fine ITO particles-containing layer, a step of applying a composition containing a silicon compound capable of forming a silicone oxide gel, a titanium compound capable of forming a titanium oxide gel and an organic solvent, to the fine ITO particles-containing layer to form a layer containing the silicon compound and the titanium compound and/or a layer containing a gel thereof, and a step of firing the glass substrate having the above two layers formed thereon in an atmosphere containing oxygen at such a temperature that the glass substrate temperature is from 400°C to 750°C.

### EFFECTS OF THE INVENTION

The infrared shielding layer-coated glass plate of the present invention has a high visible light transmittance, a low infrared transmittance, a high radiowave transmittance, excellent mechanical durability and high chemical resistance. Further, according to the production process of the present invention, the infrared shielding layer-coated glass plate of the present invention can be obtained while carrying out tempering treatment in an atmosphere containing oxygen or high temperature molding processing in an atmosphere containing oxygen, whereby simplification of the process and reduction of the production costs can be attained particularly in production of e.g. a window glass plate for an automobile.

### BRIEF DESCRIPTION OF THE DRAWING

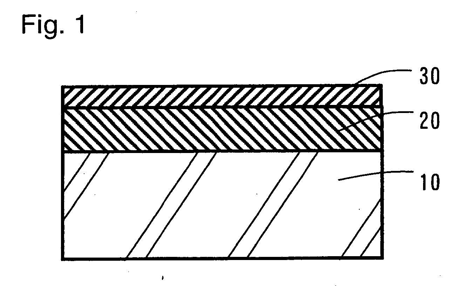

Fig. 1 is a cross section illustrating an infrared shielding layer-coated glass plate according to one embodiment of the present invention.

### MEANINGS OF SYMBOLS

10: glass substrate
20: first layer (infrared shielding layer comprising fine ITO particles and a metal oxide matrix containing titanium oxide and silicon oxide)
30: second layer (oxygen barrier layer made of a metal oxide containing silicon oxide and titanium oxide)

### BEST MODE FOR CARRYING OUT THE INVENTION

Now, the constituting elements of the present invention will be described in detail.

First, the first layer (numerical reference 20 in Fig. 1) will be described.

The fine ITO particles are a constituting element to provide the infrared shielding property, and it is important that the average primary particle diameter is at most 100 nm. If the average primary particle diameter is larger than 100 nm, such tends to cause a haze due to scattering when formed into a film on a glass substrate, such being undesirable. The average primary particle diameter is more preferably from 5 to 50 nm with a view to maintaining the transparency.

The mixing ratio of tin oxide to indium oxide in the fine ITO particles to provide the infrared shielding property, is usually preferably In/Sn = 2 to 20, particularly preferably In/Sn = 3 to 10, when represented by the ratio of the atomicity of indium to the atomicity of tin (In/Sn).

The metal oxide matrix containing silicon oxide and titanium oxide serves as a binder for the above fine ITO particles to increase the film hardness and serves to impart the adhesion to the glass substrate. Further, titanium oxide is considered to be selectively adsorbed on the surface of the fine ITO particles to serve to reduce shrinkage of the film at the time of firing described hereinafter, thus suppressing warpage of the glass plate or cracking in the film at the time of firing.

The fine ITO particles themselves are excellent in electrical conductivity, and accordingly, if the fine ITO particles are continuously in close contact with one another in the coating film, the coating film itself will show electrical conductivity and thus will adversely affect the radiowave transmittance.

The metal oxide matrix containing titanium oxide and silicon oxide is effective to limit the contact of the fine ITO particles and thereby to prevent the coating film itself from becoming an electroconductive film, and thus, it is an important constituting element to provide the radiowave transmittance of the coating film. Here, silicon oxide and titanium oxide are not required to be SiO₂ and TiO₂ in a strict sense, and they may be a matrix material comprising Si-O-Si bonds, Ti-O-Ti bonds or Si-O-Ti bonds. The matrix material preferably forms a homogenous composite metal oxide containing silicon atoms, titanium atoms and oxygen atoms as main constituting atoms. Further, some of titanium oxide may be unevenly present on the surface of the fine ITO particles. Further, the matrix material may contain nitrogen atoms bonded to Si or Ti. Namely, some of silicon oxide or titanium oxide in the matrix material may be silicon oxynitride or titanium oxynitride. However, the amount of nitrogen atoms is preferably small (for example, at most about 5% by the mass ratio) relative to oxygen atoms and is preferably an amount to such an extent that the nitrogen atoms are contained as impurities, rather than intentionally incorporated. Further, in the matrix material, constituting elements other than Si, Ti, O and N may be contained as components contained in a small amount with limits of about 5% by the mass ratio, such as C, Sn, Zr, Al, B, P, Nb and Ta.

The content ratio of the fine ITO particles to the matrix in the first layer is preferably (fine ITO particles)/(matrix) = 10/20 to 10/0.5 by the mass ratio. By the ratio being at least 10/20, required infrared shielding property will sufficiently be maintained. Further, by the ratio being at most 10/0.5, the adhesion or hardness of the coating film will be kept, and the radiowave transmittance is likely to be maintained. More preferably, (fine ITO particles)/(matrix) = 10/10 to 10/0.5.

Further, the content ratio of silicon oxide to titanium oxide in the metal oxide matrix in the first layer is preferably (SiO₂)/(TiO₂) = 50/50 to 95/5 by the mass ratio. By the ratio being at least 50/50, sufficient adhesion to a glass plate will be obtained. Further, by the above ratio being at most 95/5, an effect of suppressing warpage or cracking of a glass plate by shrinkage at the time of firing will sufficiently be obtained. More preferably, the ratio is within a range of (SiO₂)/(TiO₂) = 70/30 to 90/10.

The thickness of the first layer is from 0.2 to 2 µm. If the thickness is less than 0.2 µm, no favorable infrared shielding property can be maintained, and if the thickness exceeds 2 µm, cracking may occur at the time of forming a coating film or the transparency may decrease. More preferably, the thickness of the first layer is within a range of from 0.2 to 0.5 µm.

Now, the second layer (numerical reference 30 in Fig. 1) will be described.

The second layer is a constituting element which contributes to improvement of mechanical durability of the infrared shielding layer and functions as an oxygen barrier layer which prevents the fine ITO particles from being oxidized by supply of oxygen to the fine ITO particles at the time of firing at high temperature described hereinafter. The second layer is a metal oxide layer containing silicon oxide and titanium oxide. This metal oxide layer is preferably a layer of a dense material made of a homogeneous composite metal oxide containing silicon atoms, titanium atoms and oxygen atoms as main constituting atoms. In the metal oxide in the second layer, similar to the case of the matrix in the first layer, a small amount (for example, at most 5% by the mass ratio) of nitrogen atoms bonded to Si or Ti may be contained. Further, in the metal oxide in the second layer, constituting elements other than Si, Ti, O and N may be contained as components contained in a small amount with limits of about 5% by the mass ratio, such as C, Sn, Zr, Al, B, P, Nb and Ta.

The thickness of the second layer is required to be from 0.02 to 0.3 µm. If the thickness is less than 0.02 µm, mechanical durability will not be maintained, and the oxygen barrier properties will be insufficient. On the other hand, if the thickness exceeds 0.3 µm, cracking may occur in the coating film, or the visible light transmittance may decrease. It is more preferably within a range of from 0.05 to 0.2 µm.

The content ratio of silicon oxide to titanium oxide in the second layer is preferably (SiO₂)/(TiO₂)=85/15 to 99/1 by the mass ratio. By the above ratio being at least 85/15, the reflectance of the coating film will hardly increase, whereby the decrease in the visible light transmittance will be suppressed. Further, by the above ratio being at most 99/1, cracking in the coating film can be suppressed. The above ratio is more preferably within a range of from 90/10 to 97/3.

The infrared shielding layer-coated glass plate of the present invention is constituted so that on a glass substrate, an infrared shielding layer having the above first layer and the above second layer adjacent to each other is formed (provided that the first layer is present on the glass substrate side). The infrared shielding layer-coated glass plate of the present invention is applicable to a site where mechanical and chemical durability is highly required, such as a door glass plate for an automobile, and both infrared shielding property and radiowave transmittance can be attained.

Further, when it is used as a window glass plate for an automobile, it is required to have a high visible light transmittance in some cases depending upon the site. For such a case, the visible light transmittance is preferably at least 70% as the infrared shielding layer-coated glass plate. The visible light transmittance means a visible light transmittance determined by the calculating formula as stipulated in JIS R3212 (1998).

The glass substrate (numerical reference 10 in Fig. 1) to be used in the present invention is not particularly limited, and a glass plate made of an inorganic glass material or a glass plate made of an organic glass material may, for example, be mentioned. For a window of an automobile particularly a windshield or a sliding window, it is preferred to use a glass plate made of an inorganic glass material. The inorganic glass material may be a common glass material such as soda lime glass, borosilicate glass, alkali-free glass or quartz glass.

As the inorganic glass material, glass which absorbs ultraviolet rays and infrared rays may also be used. Specifically, it is particularly effective to employ, as the glass substrate, a glass plate made of an inorganic glass material, of which the visible light transmittance as stipulated in JIS R3212 (1998) is at least 70%, the transmittance to a light having a wavelength of 1 µm is at most 30%, and the transmittance to a light having a wavelength of 2 µm is from 40 to 70%. With the infrared shielding film in the present invention, the shielding property in a near infrared region in the vicinity of 1 µm is not so high, and by using a glass plate having a high shielding performance against light having a wavelength in the vicinity of 1 µm as a glass substrate, it is possible to provide an excellent infrared shielding property over the entire infrared region.

The metal oxide matrix in the first layer and the metal oxide layer in the second layer are preferably formed by a sol-gel method. Namely, it is preferred to form a metal oxide by using a silicon compound capable of forming a silicon oxide gel and a titanium compound capable of forming a titanium oxide gel by gelation and firing of the resulting gel. The silicon compound and the titanium compound are preferably preliminarily mixed, but as in one example for formation of the first layer described hereinafter, the matrix of a metal oxide can be formed by using a titanium compound and a mixture of a silicon compound and a titanium compound.

The silicon compound and the titanium compound are reacted with each other by the action of moisture, heat, etc. with time to form a metal oxide. Accordingly, in the middle of the reaction, these compounds and a gel of these compounds coexist, and the gel and a metal oxide resulting from the gel coexist. Accordingly, in the following description, "(the layer) containing the silicon compound and the titanium compound and/or containing a gel thereof" means that any of a state before gelation of these compounds, a state where compounds before gelation and a gel coexist, and a state where most compounds are formed into a gel, is acceptable.

The infrared shielding layer-coated glass plate of the present invention is obtained by forming the first layer and the second layer on the surface of a glass substrate. In the case of forming the metal oxide by the sol/gel method, it is preferred to employ a method wherein two layers corresponding to the above first layer and second layer are formed on the surface of a glass substrate in a state where the silicon compound and the titanium compound are converted to a gel (or a reaction stage prior thereto), and the laminate together with the glass substrate is heated to convert the gel (or one at a reaction stage prior thereto) of each layer to a metal oxide.

The infrared shielding layer-coated glass plate of the present invention can be produced as follows. Namely,
(1) A dispersion liquid containing fine ITO particles with an average primary particle diameter of at most 100 nm (hereinafter sometimes referred to simply as a dispersion liquid for forming a lower layer) is applied to the surface of a glass substrate and dried to form a fine ITO particles-containing layer (hereinafter sometimes referred to simply as a lower layer).
(2) A composition (hereinafter sometimes referred to as a composition for forming an upper layer) containing a silicon compound capable of forming a silicon oxide gel, a titanium compound capable of forming a titanium oxide gel and an organic solvent is applied to the above lower layer to form a layer (hereinafter sometimes referred to simply as an upper layer) containing the silicon compound and the titanium compound and/or containing a gel thereof.
(3) The glass substrate having the above two layers formed thereon is fired in an atmosphere containing oxygen at such a temperature that the glass substrate temperature is from 400 to 750°C.

The agglomerated state of the fine ITO particles in the first layer after firing reflects the agglomerated state in the dispersion liquid for forming a lower layer. Accordingly, in order to maintain the transparency and radiowave transmittance in the coating film, the fine ITO particles are preferably highly dispersed in the dispersion liquid for forming a lower layer. As such a dispersed state, preferred is a monodispersed state with a number average particle diameter of preferably at most 500 nm, more preferably at most 200 nm, furthermore preferably at most 100 nm. As a dispersion medium, various solvents may properly be utilized, such as polar solvents such as water and alcohols, and nonpolar solvents such as toluene and xylene. As the method for dispersion, a known method may be employed. For example, ultrasonic wave irradiation, a homogenizer, a media mill such as a ball mill, a bead mill, a sand mill or a paint shaker, or a high pressure impact mill such as a jet mill or a nanomizer, may be employed.

The fine ITO particles in the dispersion liquid for forming a lower layer may be known particles. Regarding the crystal system, by employing the matrix material of the present invention, not only common cubic crystals but also hexagonal ITO which is generally considered to be inferior in the infrared shielding property, can be used. Particularly, in the present invention, it is preferred to use, as the fine ITO particles in the dispersion liquid for forming a lower layer, ITO, of which the powder color in the xy chromaticity coordinates obtained by a 2-degree visual field with illuminant C in accordance with JIS Z8701 (1999), is such that value x is at least 0.3 and value y is at least 0.33. Fine ITO particles having such a powder color themselves have low electrical conductivity and have no high infrared shielding property. That is, the number of oxygen deficiencies in the interior of the ITO lattice is small. Such fine ITO particles have such advantages that they can be prepared only by firing a precursor powder obtained by e.g. a coprecipitation method in atmospheric air or in a general inert gas such as nitrogen. Accordingly, they can be prepared safely at a lower cost, since no conventional dangerous firing in a reducing atmosphere such as hydrogen or in a pressurized inert atmosphere, which has been required for preparation of fine ITO particles having a high infrared shielding property, is required. The process for producing an infrared shielding layer-coated glass plate of the present invention, capable of producing an infrared shielding layer-coated glass plate having sufficient infrared shielding properties, even by using the above inexpensive fine ITO particles having a low infrared shielding performance, is excellent also in view of productivity.

In the process for producing an infrared shielding layer-coated glass plate of the present invention, a porous layer is formed as the lower layer, and the silicon compound and the titanium compound contained in the composition for forming an upper layer described hereinafter are infiltrated into pores of the lower layer at the time of forming the upper layer, whereby a layer having the pores filled with the silicon compound and the titanium compound or a gel thereof can be formed. Further, a titanium compound may be blended with the dispersion liquid for forming a lower layer, a porous lower layer is formed by using the dispersion liquid, and the silicon compound and the titanium compound in the composition for forming an upper layer are infiltrated into pores of the porous lower layer, thereby to prepare two layers i.e. a first layer made of a metal oxide matrix and a second layer made of a metal oxide differing in the composition.

In a case where the lower layer is a porous layer, the silicon compound capable of forming a silicon oxide gel contained in the composition for forming an upper layer described hereinafter infiltrates into pores of the lower layer at the time of coating and reaches the surface of the glass substrate. Therefore, it is not essential for the dispersion liquid for forming a lower layer to contain a silicon compound capable of forming a silicon oxide gel, but the silicon compound may be added. However, blending of only a silicon compound in a large amount in the composition for forming a lower layer may relax the shrinkage of the film at the time of firing by selective adsorption of the titanium compound on the surface of the fine ITO particles. Therefore, in such a case, it is preferred to blend the silicon compound in a small amount or not to blend it with the composition for forming a lower layer. It is considered that the above problem will not arise when both the silicon compound and the titanium compound are blended with the composition for forming a lower layer to form a porous lower layer or when a lower layer which is not porous is formed.

The silicon compound capable of forming a silicon oxide gel is a component (hereinafter sometimes referred to as a siloxane matrix material) which is capable of becoming a silicon oxide matrix having siloxane bonds by heating.

The siloxane matrix material is a compound wherein siloxane bonds (Si-O-Si) will be formed by heating to form a three dimensional network and which thus is capable of becoming a hard transparent silicon oxide matrix. Specifically, an alkoxysilane to be used in a sol/gel method, a partial hydrolysate of the alkoxysilane, a partially hydrolyzed condensate of the alkoxysilane, water glass or a polysilazane may, for example, be mentioned. Among them, preferred are a polysilazane, a tetraalkoxysilane, a partial hydrolysate of a tetraalkoxysilane and a partially hydrolyzed condensate of a tetraalkoxysilane, and particularly preferred is a polysilazane.

The polysilazane is a generic name for linear or cyclic compounds having a structure represented by -SiR¹₂-NR²-SiR¹₂- (wherein R¹ and R² each independently are hydrogen or a hydrocarbon group), and is a material which forms a Si-O-Si network by decomposition of the Si-NR²-Si bonds by reaction with moisture. A silicon oxide type coating film obtainable from a polysilazane has high mechanical durability and gas barrier properties as compared with a silicon oxide type coating film obtainable from a tetraalkoxysilane or the like. Silicon oxide obtainable from a polysilazane sometimes contains a small amount of nitrogen atoms, and silicon oxynitride is considered to be partially formed. The silicon oxide in the present invention may be such a silicon oxide containing nitrogen atoms. Further, the mass ratios (such as the mass ratio (SiO₂)/(TiO₂)) with respect to such a silicon oxide containing nitrogen atoms are values calculated assuming that all silicon atoms are silicon atoms in silicon oxide (values calculated as silicon oxide).

In the present invention, the polysilazane is preferably a perhydropolysilazane of the above formula wherein R¹ = R² = H, a partially organic polysilazane wherein R¹ is a hydrocarbon group such as a methyl group and R² = H, or a mixture thereof. An infrared shielding layer formed by using such a polysilazane has high oxygen barrier properties and is very suitable. A particularly preferred polysilazane is a perhydropolysilazane.

In a case where the above siloxane matrix material is added to the dispersion liquid for forming a lower layer, the ratio of the fine ITO particles to the siloxane matrix material is such that (fine ITO particles)/(SiO₂) is preferably at least 10/20, more preferably at least 10/10, by the mass ratio as calculated as oxides. By the above ratio being at least 10/20, sufficient infrared shielding property can be secured. Further, (fine ITO particles)/(SiO₂) is preferably at most 10/0.5 in order to maintain adhesion and hardness of the coating film and to secure radiowave transmittance.

Further, in the composition for forming an upper layer described hereinafter, the titanium compound capable of forming a titanium oxide gel (hereinafter sometimes referred to simply as a titanium compound) also infiltrates into pores of the lower layer at the time of coating and reaches the surface of the glass substrate. Therefore, addition of the titanium compound to the dispersion liquid for forming a lower layer is not necessarily essential, but the titanium compound is preferably added. As described above, the titanium compound is selectively adsorbed on the surface of the fine ITO particles and functions to relax the shrinkage of the film at the time of firing. Therefore, it is considered that when a titanium compound is blended with the dispersion liquid for forming a lower layer, the titanium compound will more selectively be adsorbed on the surface of the fine ITO particles.

Such a titanium compound is preferably an organic titanium compound and may, for example, be a titanium tetraalkoxide compound, a titanium chelate compound, a titanium acylate compound or a titanate coupling agent.

The titanium compound in the present invention is preferably a titanium tetraalkoxide compound or a titanium chelate compound. The titanium tetraalkoxide compound is preferably a compound of the formula Ti(OR')₄ (wherein R' is a C₁₋₈ hydrocarbon group), and specifically, it may, for example, be titanium tetra-n-butoxide, titanium tetraisopropoxide, titanium tetramethoxide, titanium tetraethoxide or tetrakis(2-ethylhexyloxy)titanium. The titanium chelate compound is preferably a chelate compound of a titanium alkoxide, and specifically, it may, for example, be diisopropoxybis(ethylacetoacetate)titanium, di-n-butoxybis(ethylacetoacetate)titanium, diisopropoxybis(acetylacetonato)titanium, di-n-butoxybis(acetylacetonato)titanium or titanium tetraacetylacetonate. From the viewpoint of handling efficiency, the titanium compound in the present invention is particularly preferably diisopropoxybis(ethylacetoacetate)titanium, di-n-butoxybis(ethylacetoacetate)titanium, diisopropoxybis(acetoacetonate)titanium or di-n-butoxybis(acetoacetonate)titanium. The titanium compound may be added after preparation of the dispersion liquid containing the fine ITO particles, or may be added during preparation of the dispersion liquid containing the fine ITO particles.

Further, the dispersion liquid for forming a lower layer may contain another solvent other than the dispersion medium of ITO. The solvent is not particularly limited so long as it will not destroy the ITO dispersed state and the above silicon compound and titanium compound to be added as the case requires are dissolved. It may, for example, be an alcohol, an ether alcohol, a ketone, an ester, an ether, an aliphatic hydrocarbon, an aromatic hydrocarbon or a halogenated hydrocarbon. They are properly mixed considering the coating method and the desired thickness. Among them, an alcohol or an ether alcohol is preferably used. In addition, the dispersion liquid for forming a lower layer may contain a dispersant of ITO, a surfactant to adjust the properties of the coating film, or the like as the case requires. The amount of solid content in the dispersion liquid is preferably at most 20% by the mass ratio based on the entire dispersion liquid.

The dispersion liquid for forming a lower layer thus obtained is applied to the surface of a glass substrate and dried to prepare a lower layer. The application method is not particularly limited, and a known method such as a dip coating method, a spin coating method, a spray coating method, a flexographic printing method, a screen printing method, a gravure printing method, a roll coating method, a meniscus coating method or a die coating method may, for example, be used. The drying temperature is preferably at most 200°C, particularly preferably at most 160°C. In the drying step, it is the main purpose to remove the solvent component, etc. in the film, and even when the temperature is raised higher than this, no improvement in the effect can be expected, such being uneconomical. The drying time is preferably from about 30 seconds to about 2 hours, particularly preferably from 1 minute to 1 hour. The drying may be carried out either in atmospheric air or in a non-oxidizing atmosphere. However, no particular advantage in the non-oxidizing atmosphere can be expected.

Further, it is possible to carry out this drying step under reduced pressure. The ultimate vacuum is preferably from about 10 kN/m² to about 0.10 kN/m², and the treatment time is preferably from about 10 seconds to about 30 minutes, particularly preferably from 10 seconds to 5 minutes.

As mentioned above, the composition for forming an upper layer is applied to form an upper layer to be adjacent to the lower layer formed on the surface of the glass substrate.

The composition for forming an upper layer of the present invention contains a silicon compound capable of forming a silicon oxide gel and a titanium compound capable of forming a titanium oxide gel. The titanium compound has a high effect of suppressing cracking in the film at the time of shrinkage by crosslinking of the silicon compound in the firing step described hereinafter. Accordingly, by addition of an organic titanium compound, a thicker coating film can be formed, and in addition, higher oxygen barrier properties and mechanical durability will be developed. As such a silicon compound and a titanium compound, compounds similar to the siloxane matrix material and the organic titanium compound to be added to the dispersion liquid for forming a lower layer are preferably used. It is preferred to use, as the silicon compound, a polysilazane, particularly a perhydropolysilazane.

Further, the composition for forming an upper layer contains an organic solvent. The organic solvent is not particularly limited so long as it is a solvent in which the silicon compound and the titanium compound are dissolved. Specifically, it may, for example, be an aliphatic hydrocarbon, an aromatic hydrocarbon, a ketone, an ester, an ether or a halogenated hydrocarbon. Needless to say, such organic solvents may be used alone or as mixed. Further, the composition for forming an upper layer may contain a film-hardening catalyst, an activator, another metal source or the like as the case requires. The amount of the silicon compound in the composition for forming an upper layer is preferably at most 20%, particularly preferably at most 10% by the mass ratio based on the entire composition.

When the composition for forming an upper layer is applied to the porous lower layer, it penetrates into pores of the lower layer and further reaches the surface of the glass substrate and functions as a binder for fine ITO particles and as an agent to improve adhesion to the glass substrate. Particularly when the dispersion liquid for forming a lower layer contains no siloxane matrix material or contains only a small amount of the siloxane matrix material, infiltration of the composition for forming an upper layer will be significant. Accordingly, even when the content ratio of the siloxane matrix material in the dispersion liquid for forming a lower layer is at most 5% based on the fine ITO particles by the mass ratio as calculated as oxides, when a laminated film is formed, such a structure is accomplished that silicon oxide is contained in an amount of from about 5 to about 200% by the mass ratio based on the fine ITO particles in the first layer, whereby a first layer which satisfies the preferred embodiment of the present invention is obtained.

As a method of applying the composition for forming an upper layer to the lower layer, a known technique may be utilized similar to the method of applying the dispersion liquid for forming a lower layer. Further, after the composition for forming an upper layer is applied to the lower layer and before after-mentioned firing is carried out, it is preferred to dry the upper layer to volatilize volatile components such as an organic solvent. On that occasion, it is preferred that the drying temperature is at most 200°C, particularly at most 160°C and the drying time is from about 30 seconds to about 2 hours, particularly from 1 minute to 1 hour.

After formation of the laminated film comprising the lower layer and the upper layer on the glass substrate as described above, firing is preferably carried out at a temperature of at least 400°C to cure the coating film thereby to form an infrared shielding layer having the first layer and the second layer adjacent to each other. The firing time is usually from about 30 seconds to about 10 hours, preferably from 1 minute to 1 hour. With respect to the atmosphere, this firing can be carried out usually in an atmosphere containing oxygen, such as in atmospheric air, such being economical. Particularly when a tempered glass plate to be used as a window glass plate for an automobile is to be prepared, tempering treatment is carried out by raising the temperature to a level close to from 600 to 700°C in atmospheric air, followed by molding and in some cases, cooling in air. When the infrared shielding layer of the present invention is employed, no deterioration of the infrared shielding property will be observed even when firing is carried out for the tempering treatment. Accordingly, firing is possible by utilizing the heat of high temperature in this tempering step, whereby a tempered glass plate for an automobile or for building, provided with an infrared shielding layer having high durability can be efficiently and economically produced. Further, as described above, the composition for forming an upper layer is a composition containing a titanium compound and suitable particularly for formation of an infrared shielding layer by heat treatment at a high temperature (cracking by shrinkage of the film is less likely to occur even when heated at a high temperature), and accordingly its characteristics are likely to be exhibited when the heat treatment temperature is such a temperature that the glass substrate temperature is from 400 to 750°C. Such heat treatment at high temperature is referred to as firing in the present invention. The firing temperature is particularly preferably such a temperature that the glass substrate temperature is from 600 to 700°C. A denser infrared shielding layer will be obtained by firing.

### EXAMPLES

Now, the present invention will be described in further detail with reference to Examples. However, it should be understood that the present invention is by no means restricted to such specific Examples. Further, the average particle diameter of the fine ITO particles in the obtained infrared shielding layer was determined by observation by a transmission electron microscope (TEM). The obtained infrared shielding layer-coated glass plate was evaluated as follows.

### (Evaluation)

(1) layer thickness: The cross section of the infrared shielding layer after firing was observed by a scanning electron microscope (S-800, manufactured by Hitachi, Ltd.), and from the obtained observation image, the thickness (nm) of each of the first layer and the second layer was obtained.
(2) layer composition: The composition distribution (mass ratio as calculated as oxide) of the infrared shielding layer after firing in the depth direction was measured with respect to In, Si and Ti by X-ray photoelectron spectroscopy (XPS).
(3) Film outer appearance: The film after firing was observed visually and by a metallurgical microscope, and rated whether cracking resulted in the surface of the second layer, on the basis of the following standards. O: no cracking resulted, Δ: cracking not visually observed but observed by a microscope, and X: cracking visually observed.
(4) Visible light transmittance (Tv): The transmittance of the infrared shielding layer-coated glass plate at from 380 to 780 nm was measured by a spectrophotometer (U-3500, manufactured by Hitachi, Ltd.), and the visible light transmittance (%) was calculated in accordance with JIS R3212 (1998).
(5) Solar energy transmittance (Te): The transmittance of the infrared shielding layer-coated glass plate at from 300 to 2;100 nm was measured by a spectrophotometer (U-3500, manufactured by Hitachi, Ltd.), and the solar energy transmittance (%) was calculated in accordance with JIS R3106 (1998). Further, the infrared shielding performance in the present invention was represented by the performance of the solar energy transmittance.
(6) Transmittance in an infrared region: The transmittance of the infrared shielding layer-coated glass plate at from 300 to 2,100 nm was measured by a spectrophotometer (U-3500, manufactured by Hitachi, Ltd.), and the transmittance at a wavelength of 1 um was represented by T1 (%) and the transmittance at a wavelength of 2 um was represented by T2 (%).
(7) Abrasion resistance: Using a Taber type abrasion resistance tester, a 1,000 rotation abrasion test was carried out by a CS-10F abrasion wheel in accordance with the method disclosed in JIS R3212 (1998), and the degree of scratches before and after the test was measured by the haze (haze value), and the abrasion resistance was evaluated by the increase (%) in haze.
(8) Chemical resistance: A sulfuric acid solution of 0.05 mol/liter and a sodium hydroxide solution of 0.1 mol/liter were dropped on the coated film and left to stand at 25°C for 24 hours, whereupon they were washed with water, and the changes in the appearance and properties as between before and after the test were monitored. The coated film of which the appearance and properties did not changed was rated as passed.

### EXAMPLE 1

Fine ITO particles, of which the powder color in the xy chromaticity coordinates in a 2-degree visual field with illuminant c was (x,y)=(0.353,0374) and which has a primary particle diameter of 45 nm, were dispersed in a solvent mixture of ethanol/1-propanol (volume ratio=50/50) containing 0.02 mass% of concentrated nitric acid by a bead mill to prepare a fine ITO particles dispersion liquid A containing 20 mass% of ITO. The number average dispersed particle diameter of the fine ITO particles in the dispersion liquid A was measured by a laser Zeta-potential analyzer (ELS-8000, manufactured by OTSUKA ELECTRONICS CO., LTD.) and was 80 nm.

The dispersion liquid A was diluted with 2-butanol to a solid content concentration of 7 mass% thereby to prepare a dispersion liquid B.

The obtained dispersion liquid B was applied to an ultraviolet absorptive green glass plate (Tv: 75%, Te: 47%, Ti=22%, T2=49%, common name: UVFL, manufactured by Asahi Glass Company, Limited) with a thickness of 3.5 mm by spin coating and dried in atmospheric air at 120°C for 10 minutes to prepare a lower layer.

A xylene solution (composition X) containing 3.5 mass% of a perhydropolysilazane (Aquamica NV-110, tradename, manufactured by AZ Electronic Materials) and 1.2 mass% of titanium tetra-n-butoxide (TA-25, tradename, manufactured by Matsumoto Chemical Industry Co., Ltd.) was applied to the lower layer by spin coating and dried in atmospheric air at 120°C for 10 minutes to form an upper layer.

The above obtained film-coated glass plate was fired in an electric furnace in an atmosphere of atmospheric air maintained at 720°C until the glass plate temperature became 685°C to obtain an infrared shielding layer-coated glass plate. The firing time was about 4 minutes.

The properties of the obtained infrared shielding layer-coated glass plate are shown in Tables 1 and 2. The composition of the second layer coating film was analyzed by secondary ion mass spectrometry and as a result, it was found that the composition was silicon oxynitride containing a very small amount of nitrogen, and the main component was silicon oxide containing TiO₂.

### EXAMPLE 2

With 100 g of the dispersion liquid B, 2.2 g of diisopropoxybis(acetylacetonate)titanium (TAA, tradename, manufactured by MITSUBISHI GAS CHEMICAL COMPANY, INC.) was mixed, followed by stirring for 1 hour to prepare a dispersion liquid C. An infrared shielding layer-coated glass plate was prepared in the same manner as in Example 1 except that the above dispersion liquid C was used instead of the dispersion liquid B in preparation of the lower layer. The properties of the obtained infrared shielding layer-coated glass plate are evaluated and the results are shown in Tables 1 and 2.

### EXAMPLE 3

An infrared shielding layer-coated glass plate was prepared in the same manner as in Example 2 except that in preparation of the upper layer, a xylene solution (composition Y) containing 3.5 mass% of a perhydropolysilazane (Aquamica NV-110, tradename, manufactured by AZ Electronic Materials) and 2.1 mass% of diisopropoxybis (ethylacetoacetate)titanium (TC-750, tradename, manufactured by Matsumoto Chemical Industry Co., Ltd.) was used instead of the composition X and that the thickness of the second layer after firing was as identified in Table 1. The properties of the obtained infrared shielding layer-coated glass plate were evaluated and the results are shown in Tables 1 and 2.

### EXAMPLE 4

An infrared shielding layer-coated glass plate was prepared in the same manner as in Example 3 except that the thickness of the first layer and the thickness of the second layer after firing were as identified in Table 1. The properties of the obtained infrared shielding layer-coated glass plate were evaluated and the results are shown in Tables 1 and 2.

### EXAMPLE 5 (Comparative Example)

An infrared shielding layer-coated glass plate was prepared in the same manner as in Example 2 except that in preparation of the upper layer, a xylene solution (composition Z) containing only 3.5 mass% of a perhydropolysilazane was used instead of the composition X. The properties of the obtained infrared shielding layer-coated glass plate were evaluated and the results are shown in Tables 1 and 2.

### EXAMPLE 6 (Comparative Example)

An infrared shielding layer-coated glass plate was prepared in the same manner as in Example 1 except that in preparation of the upper layer, the composition Z was used instead of the composition X. The properties of the obtained infrared shielding layer-coated glass plate were evaluated and the results are shown in Tables 1 and 2.

**TABLE 1**

| | First layer | | | Second layer | | |
|---|---|---|---|---|---|---|
| | Dispersion liquid | Thickness | Layer composition ITO/SiO_{2/}TiO₂ | Dispersion liquid | Thickness | Layer composition SiO₂/TiO₂ |
| Ex. 1 | B | 0.33 | 66/31/3 | X | 0.11 | 93/7 |
| Ex. 2 | C | 0.33 | 66/28/6 | X | 0.11 | 93/7 |
| Ex. 3 | C | 0.33 | 66/27/7 | Y | 0.12 | 90/10 |
| Ex. 4 | C | 0.36 | 66/27/7 | Y | 0.13 | 90/10 |
| Ex. 5 | C | 0.33 | 66/31/3 | Z | 0.11 | 100/0 |
| Ex. 6 | B | 0.33 | 66/34/0 | Z | 0.11 | 100/0 |

**TABLE 2**

| | Film outer appearance | Tv | Te | T1 | T2 | Abrasion resistance | Chemical resistance |
|---|---|---|---|---|---|---|---|
| Ex. 1 | ○ | 72 | 41 | 21 | 4 | 1.0 | Passed |
| Ex. 2 | ○ | 72 | 40 | 21 | 3 | 1.2 | Passed |
| Ex. 3 | ○ | 72 | 40 | 21 | 3 | 1.1 | Passed |
| Ex. 4 | ○ | 71 | 39 | 20 | 2 | 1.0 | Passed |
| Ex. 5 | Δ | 72 | 41 | 21 | 4 | 1.3 | Passed |
| Ex. 6 | × | 72 | 43 | 21 | 7 | 1.7 | Passed |

In Example 5 wherein no titanium is contained in the second layer and in Example 6 wherein no titanium is contained in both the first layer and the second layer, cracking occurred in the film after firing, and resulting oxidation of ITO was confirmed and further, the abrasion resistance decreased. That is, it is understood that an infrared shielding layer-coated glass plate very excellent in mechanical and chemical durability is obtained by employing a structure such that the second layer contains titanium.

### INDUSTRIAL APPLICABILITY

The infrared shielding layer-coated glass plate of the present invention has a high visible light transmittance, has a high radiowave transmittance and is excellent in mechanical and chemical durability. Further, the production process of the present invention is suitably used particularly for preparation of glass for an automobile, glass for building, etc.

The entire disclosure of Japanese Patent Application No. 2005-118411 filed on April 15, 2005 including specification, claims, drawings and summary is incorporated herein by reference in its entirety.

## Claims

1. An infrared shielding layer-coated glass plate comprising a glass substrate and an infrared shielding layer having the following first layer and the following second layer adjacent to each other formed on the glass substrate (provided that the first layer is present on the glass substrate side), wherein the first layer is a layer with a thickness of from 0.2 to 2 µm, having such a structure that fine ITO particles with an average primary particle diameter of at most 100 nm are bound to one another by a metal oxide matrix containing silicon oxide and titanium oxide; and the second layer is a metal oxide layer with a thickness of from 0.02 to 0.3 µm, containing silicon oxide and titanium oxide.

2. The infrared shielding layer-coated glass plate according to Claim 1, wherein the content ratio of the fine ITO particles to the matrix in the first layer is such that (fine ITO particles)/(matrix)=10/20 to 10/0.5 by the mass ratio.

3. The infrared shielding layer-coated glass plate according to Claim 1 or 2, wherein the content ratio of silicon oxide to titanium oxide in the first layer is such that (SiO₂)/(TiO₂)=50/50 to 95/5 by the mass ratio.

4. The infrared shielding layer-coated glass plate according to any one of Claims 1 to 3, wherein the content ratio of silicon oxide to titanium oxide in the second layer is such that (SiO₂)/(TiO₂)=85/15 to 99/1 by the mass ratio.

5. The infrared shielding layer-coated glass plate according to any one of Claims 1 to 4, wherein the glass substrate is a glass plate having a visible light transmittance of at least 70% as stipulated in JIS R3212 (1998), a transmittance of light having a wavelength of 1 µm of at most 30% and a transmittance of light having a wavelength of 2 µm of from 40 to 70%.

6. The infrared shielding layer-coated glass plate according to any one of Claims 1 to 5, which has a visible light transmittance of at least 70% as stipulated in JIS R3212 (1998).

7. A process for producing an infrared shielding layer-coated glass plate, which comprises:
a step of applying a dispersion liquid comprising fine ITO particles with an average primary particle diameter of at most 100 nm dispersed in a dispersion medium, to the surface of a glass substrate and drying the dispersion liquid to form a fine ITO particles-containing layer,
a step of applying a composition containing a silicon compound capable of forming a silicone oxide gel, a titanium compound capable of forming a titanium oxide gel and an organic solvent, to the fine ITO particles-containing layer to form a layer containing the silicon compound and the titanium compound and/or containing a gel thereof, and
a step of firing the glass substrate having the above two layers formed thereon in an atmosphere containing oxygen at such a temperature that the glass substrate temperature is from 400°C to 750°C.

8. The process for producing an infrared shielding layer-coated glass plate according to Claim 7, wherein the silicon compound is a polysilazane.

9. The process for producing an infrared shielding layer-coated glass plate according to Claim 7 or 8, wherein the powder color of the fine ITO particles in the xy chromaticity coordinates obtained by a 2-degree visual field with illuminant C in accordance with JIS Z8701 (1999), is such that value x is at least 0.3 and value y is at least 0.33.

10. The process for producing an infrared shielding layer-coated glass plate according to any one of Claims 7 to 9, wherein the dispersion liquid contains a titanium compound capable of forming a titanium oxide gel.

11. The process for producing an infrared shielding layer-coated glass plate according to any one of Claims 7 to 10, wherein the titanium compound is a titanium tetraalkoxide compound or a titanium chelate compound.
